# EUROPÄISCHE PATENTANMELDUNG

(11) **EP 1 422 735 A2**
(43) Veröffentlichungstag der Anmeldung: **26.05.2004**
(21) Anmeldenummer: 03024725.8
(22) Anmeldetag: 29.10.2003
(51) Int. Cl.: H01H 71/02

(54) **Verfahren zur Herstellung eines gehäuses für ein elektrisches Schaltgerät**

(30) Priorität: 21.11.2002 DE 10254259
(71) Anmelder: ABB PATENT GmbH, 68526 Ladenburg (DE)
(72) Erfinder: Claeys, Patrick, Dipl.-Ing., 64293 Darmstadt (DE); Schick, Peter, Dipl.-Ing., 69118 Heidelberg (DE); Hofmann, Jürgen, Dipl.-Ing., 64683 Einhausen (DE)
(74) Vertreter: Miller, Toivo

(57) **Zusammenfassung**

Es wird ein Verfahren zur Herstellung eines aus Teilen gebildeten Gehäuses für ein elektrisches Schaltgerät, insbesondere für einen Fehlerstromschutzschalter, Leitungsschutzschalter, oder Motorschutzschalter, die nach Einbau von Schaltgerätekomponenten wie z. B. Klemmen, magnetischem und thermischem Auslöser, Schaltwerk, Lichtbogenlöschkammer und dergleichen, miteinander starr verbunden werden bzw. sind, beschrieben, wobei das Gehäuse wenigstens teilweise aus Thermoplast und teilweise aus Duroplast mittels eines Mehrkomponentenspritzverfahrens hergestellt wird.

## Beschreibung

Die Erfindung betrifft ein Verfahren zur Herstellung eines Gehäuses für ein elektrisches Schaltgerät und ein Gehäuse, dass nach diesem Verfahren hergestellt ist.

Jedes Schaltgerät besitzt ein Gehäuse, in das einzelne Komponenten eingesetzt sind und aus zwei Gehäusehälften gebildet ist, die zum Beispiel mittels Nietverbindungen oder insbesondere bei Motorschutzschaltern über Rastverbindungen miteinander verbunden sind. Im übrigen bestehen beide Gehäusehälften jeweils für sich aus nur einem Material, entweder aus Thermoplast, wie z.B. PA6 oder PA6.6 oder aus einem Duroplast, wie beispielsweise Harnstoff oder Melamin.

Bei Leitungsschutzschaltern, bei denen der Lichtbogen von seiner Entstehungsstelle in das Lichtbogenlöschblechpaket geführt wird, sind beidseitig zur Lichtbogenkammer oder auch zur sogenannten Vorkammer, das ist diejenige Kammer, die vor dem Lichtbogenlöschblechpaket angeordnet ist und in der der Lichtbogen zum Lichtbogenlöschblechpaket geführt wird, lose Isolierstoffplatten eingesetzt, die auch aus einem gasabgebenden Isoliermaterial hergestellt sein können. Die Verwendung solcher Isolierstoffplatten erfordert den Herstellungsschritt und die Montageschritte "Einsetzen beider Isolierstoffplatten" in das Gerät.

Bei manchen Leitungsschutzschaltern ist es notwendig, dass ein transparentklares Sichtfenster vorgesehen ist; hierzu wird ein eigenes Fensterteil hergestellt und in eine entsprechende Ausnehmung am Gehäuse eingesetzt.

Bei allen diesen Teilen ist, wie erwähnt, ein eigener Herstellschritt und wenigstens ein Montageschritt erforderlich.

Aufgabe der Erfindung ist es, ein Verfahren der eingangs genannten Art zu schaffen, mit dem die Herstellung eines Gehäuses für ein elektrisches Schaltgerät durch Einsparung oder Entfall von Bauteilen und Vereinfachung oder Entfall der Montage vereinfacht wird.

Diese Aufgabe wird erfindungsgemäß gelöst durch die Merkmale des Anspruches 1.

Weiterhin ist es Aufgabe der Erfindung, ein entsprechendes Gehäuse für ein elektrisches Schaltgerät zu schaffen.

Zwar ist aus der DE 200 04 900 U 1 ein Zweikomponentenspritzteil bekannt geworden, das als Abdeckrahmen für ein Elektroinstallationsgerät dient. Hierbei sind zwei Formstoffe, von denen der eine metallisierbar und der andere nicht metallisierbar ist, durch einen thermoplastischen Zweikomponentenspritzvorgang formschlüssig miteinander verbunden. Dabei werden Thermoplaste, also gleichartige Materialien, miteinander verbunden.

Erfindungsgemäß sollen unterschiedliche Kunststoffmaterialien in einem Arbeitsgang zusammengesetzt werden. Danach kann das Gehäuse auf unterschiedliche Weise ausgestaltet sein:
Zum einen kann das Gehäuse wenigstens im Klemmenbereich aus Duroplast und wenigstens im Bereich der Vorkammer und der Lichtbogenlöschkammer aus einem Thermoplast gebildet sein. Da das Thermoplast unter dem Einfluss eines Lichtbogens Gas abgibt, kann es in besonders vorteilhafter Weise im Bereich der Lichtbogenkammer bzw. der Vorkammer eingesetzt werden, wodurch eigene, lose eingelegte Isolierstoffplatten vermieden werden können. Wenn das Gehäuse im Bereich der Klemmen aus Duroplast hergestellt ist, hat dies den Vorteil, dass Verformungen des Gehäuses durch Betätigung der Klemmschrauben, aufgrund des höheren E-Moduls des Duroplastes gegenüber dem Thermoplast, ebenfalls vermieden sind.

Zwei zum Beispiel schalenförmige Gehäuseteile für ein elektrisches Installationsgerät werden häufig mit Nietverbindungen miteinander verbunden, wobei die Ränder der Gehäuseteile aufeinander liegen. Auch diese Verbindung kann dadurch vereinfacht werden, dass im Bereich der Gehäusetrennung unterschiedliche Materialien vorgesehen sind, wie insbesondere in den Ansprüchen 4 oder 5 angegeben. Die Verbindung der beiden Gehäuseteile erfolgt dabei durch Laser- oder Ultraschall Schweißung. Zu diesem Zweck ist an dem Rand beider Gehäuseteile ein Abschnitt aus Thermoplast vorgesehen. Bei Thermoplasten ist die Ultraschallschweißbarkeit in aller Regel gegeben. Für das Laserschweißen muß genau einer dieser thermoplastischen Abschnitte lasertransparent sein, so dass das eintreffende Laserlicht an die Trennebene gelangt und dort das laserabsorbierende Thermoplast aufschmilzt, so dass es ggf. unter zusätzlich aufgebrachten Druck zu einer Verbindung der Bauteile kommt.

Als weitere Verbindungstechniken kommen Verfahren wie das Warmverstemmen in Betracht. Hierbei werden an ein Gehäuseteil aus Duroplast thermoplastische Zapfen angespritzt, die durch Löcher des zweiten Gehäuseteils, gleich ob Thermo- oder Duroplast geführt werden, um anschliessend warmverstemmt zu werden.

Weitere vorteilhafte Ausgestaltungen und Verbesserungen der Erfindung sind den weiteren Unteransprüchen zu entnehmen.

Verbindungen von Thermo- und Duroplasten können auf mehrere Arten erfolgen:
mechanisch durch Schwindung, wobei das Duroplastteil an der Verbindungsstelle vom Thermoplastteil umgeben ist und der Thermoplast auf den Duroplast aufschwindet, und umgekehrt, oder physikalisch chemisch, wenn Fließfronten der beiden Materialien aufeinander treffen. Im letzteren Falle können Diffusionen auftreten, wobei Molekülketten beider Materialien miteinander verschlaufen. Auch Adhäsions- oder Kohäsionskräfte können zu einer Haftung führen.

Allerdings führen nicht alle Materialien zu einer optimalen Halterung und Haftung; insbesondere bei solchen Thermoplasten, bei denen die Schmelztemperatur relativ niedrig ist und etwa im Bereich der Erweichungstemperatur des Duroplastes liegt, wird oft eine akzeptable Haftung nicht erreicht. Beeinflußt kann das Haftergebnis solcher Materialien durch geeignete Temperierung des Werkzeuges werden.

Für schwer zu verbindende Materialkombinationen können geometrische Gestaltungselemente wie Hinterschneidungen z.B. in Form einer Schwalbenschwanzführung verwendet werden.

Diese Erkenntnisse können insbesondere erfindungsgemäß bei Installationsschaltgeräten, wie z. B. Leitungsschutzschaltern, Fehlerstromschutzschaltern und Motorschutzschaltern, angewendet werden, bei denen an unterschiedlichen Stellen der Gehäuse unterschiedliche Eigenschaften gefordert werden:
Im Bereich z. B. der Lichtbogenkammer eines Leitungsschutzschalters kann bevorzugt ein gasendes Thermoplast eingebracht bzw. eingespritzt werden, wodurch eigene Lichtbogenkammerplatten nicht mehr erforderlich werden. Man spritzt daher in die Form, in der das Gehäuse hergestellt wird, im Bereich der Lichtbogenlöschkammer gasendes Thermoplast ein, wogegen der übrige Bereich aus Duroplast bestehen kann.

Anhand der Zeichnung, in der einige Ausführungsbeispiele der Erfindung dargestellt sind, soll die Erfindung sowie weitere vorteilhafte Ausgestaltungen und Verbesserungen der Erfindung näher erläutert und beschrieben werden.

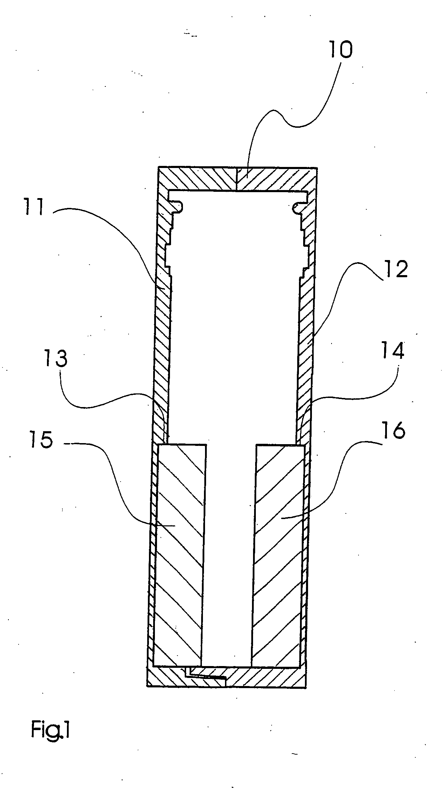

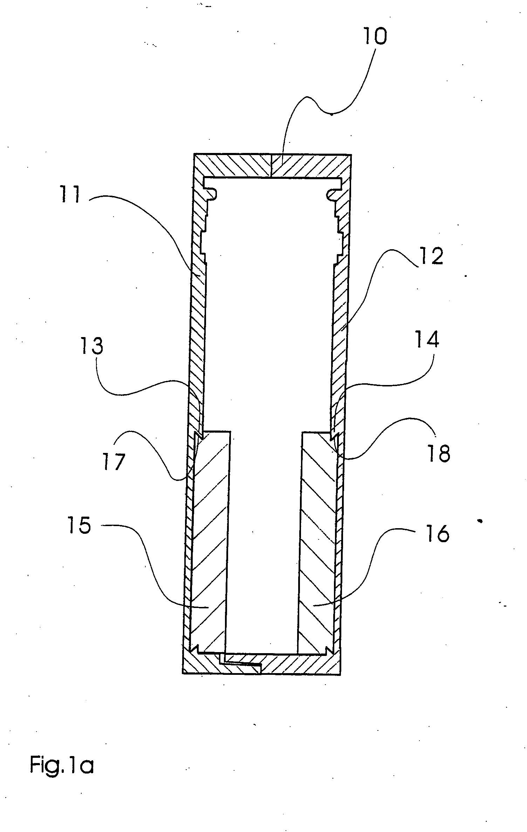

Es zeigen
- Fig. 1: eine Teilschnittansicht im Vorkammerbereich eines elektrischen Installationsgerätes,
- Fig. 1 a: eine Teilschnittansicht im Vorkammerbereich eines elektrischen Installationsgerätes (mechanische Verbindung der Materialien),
- Fig. 2: eine Querschnittsansicht eines Gehäuses eines elektrischen Installationsgerätes,
- Fig. 2a: eine Querschnittsansicht eines Gehäuses eines elektrischen Installationsgerätes (Verbindungstechnik mittels Laserschweißung),
- Fig. 3: eine weitere Teilschnittansicht eines elektrischen Installationsgehäuses.

Die Fig. 1 zeigt ein Gehäuse 10 eines elektrischen Installationsgerätes mit zwei schalenförmigen Gehäusehälften 11 und 12, die beide aus einem Duroplast hergestellt sind. Im Bereich der Vorkammer vor einem Lichtbogenlöschblechpaket, also in dem Bereich, in dem der Lichtbogen entsteht und zu einer Lichtbogenlöschkammer geführt wird, ist jeweils eine. Vertiefung 13, 14 vorgesehen, in die ein Thermoplast 15, 16 aus gasendem Material eingespritzt ist; dies wird durch einZweikomponentenspritzverfahren erreicht, bei dem beispielsweise das Duroplast zunächst und danach das Thermoplast 15, 16 in die Form eingespritzt wird. Damit das Thermoplast 15, 16 besser in den Vertiefungen 13, 14 hält, können sich die Seitenwände 17, 18 der Vertiefungen schwalbenschwanzartig zur Innenfläche der Gehäusehälften 11- 12 verjüngen, wie in Fig 1 a dargestellt.

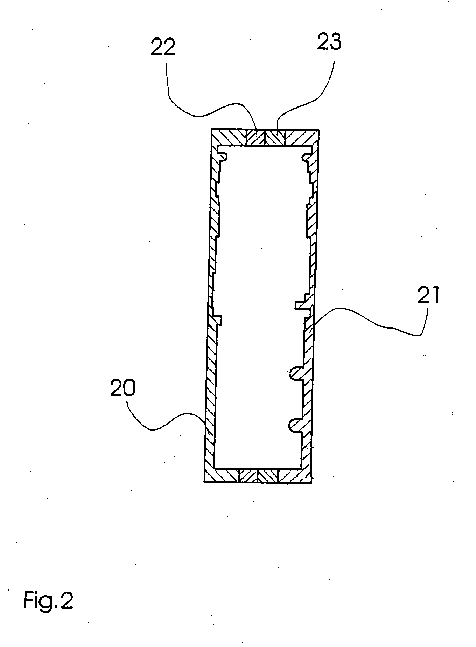

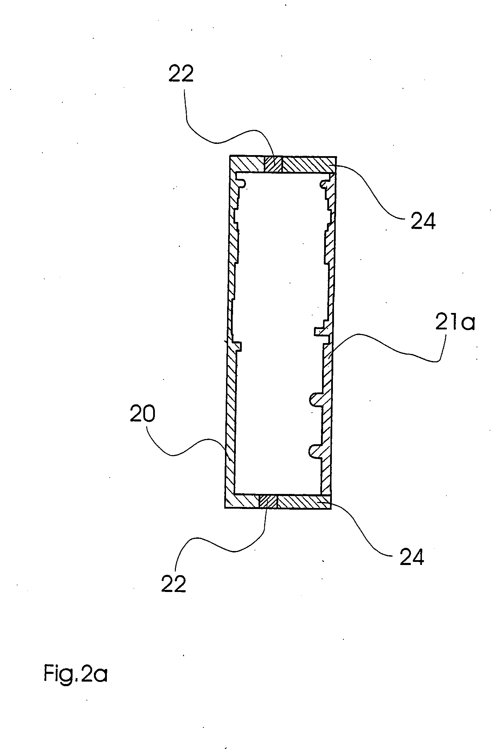

Die Fig. 2 zeigt eine weitere Ausgestaltung eines Installationsgehäuses, das aus den Gehäuseteilen 20 und 21 aus einem Duroplast besteht. Am freien Rand der Gehäusehälften ist jeweils ein Randbereich 22, 23 aus Thermoplast in einem Zweikomponentenspritzverfahren umlaufend angeformt, sodaß die beiden Abschnitte 22 und 23 miteinander durch ein Ultraschallverfahren verschweißt werden können. Fig. 2a zeigt als Alternative zum Ultraschall- ein Laserschweißen. Gegebenenfalls kann dies so durchgeführt werden, dass beispielsweise die umlaufende Schmalseitenwandung 24 einer Gehäusehälfte aus laserlichtdurchlässigem Material besteht, so dass dieses Bauteil aus dem Duroplastboden 21 a und der umlaufenden Schmalseitenwandung 24 zusammengesetzt ist.

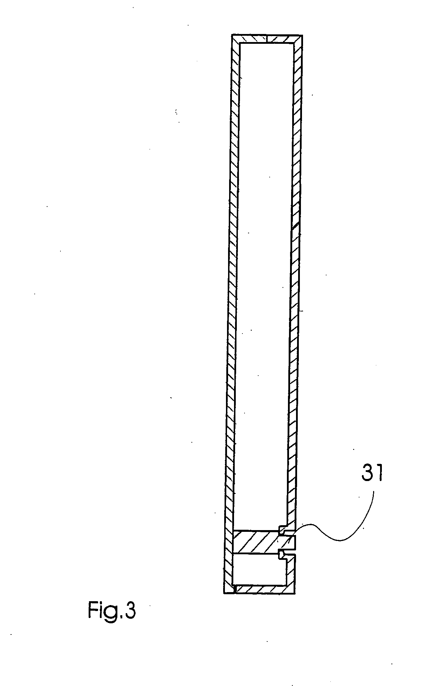

Bei der Ausführung nach der Fig. 3 ist in einen Gehäuseboden eines Installationsgehäuses aus Duroplast ein Zapfen 31 aus Thermoplast im Zweikomponentenspritzverfahren eingespritzt, mit dem das gegenüberliegende Gehäuseteil durch zum Beispiel Warmverstemmung fest verbunden wird.

## Patentansprüche

1. Verfahren zur Herstellung eines aus Teilen gebildeten Gehäuses für ein elektrisches Schaltgerät, insbesondere für einen Fehlerstromschutzschalter, Leitungsschutzschalter, oder Motorschutzschalter, die nach Einbau von Schaltgerätekomponenten wie z. B. Klemmen, magnetischem und thermischem Auslöser, Schaltwerk, Lichtbogenlöschkammer und dergleichen, miteinander starr verbunden werden bzw. sind, **dadurch gekennzeichnet, dass** das Gehäuse wenigstens teilweise aus Thermoplast und teilweise aus Duroplast mittels eines Mehrkomponentenspritzverfahrens hergestellt wird.

2. Gehäuse, hergestellt nach dem Verfahren nach Anspruch 1, **dadurch gekennzeichnet, dass** die Gehäuseteile wenigstens teilweise aus Duroplast hergestellt sind und insbesondere im Vorkammerbereich einen Teilbereich aus vorzugsweise gasendem Thermoplast aufweisen.

3. Gehäuse nach Anspruch 2, **dadurch gekennzeichnet, dass** das Gehäuse einen ebenfalls im Mehrkomponentenspritzverfahren klar durchsichtigen Abschnitt zur Bildung eines aus thermoplastischen Material bestehenden Sichtfensters aufweist.

4. Gehäuse nach einem der vorherigen Ansprüche, **dadurch gekennzeichnet, dass** das Gehäuse aus zwei Schalenhälften besteht, die aus Duroplast mit an der zur jeweils anderen Schalenhälfte zuweisenden Kante Thermoplastansätzen aufgebaut sind, so dass die Schalenhälften durch Ultraschall Schweißung miteinander verbindbar sind.

5. Gehäuse nach einem der vorherigen Ansprüche, **dadurch gekennzeichnet, dass** das Gehäuse aus zwei Schalenhälften besteht, die aus Duroplast mit an der zur jeweils anderen Schalenhälfte zuweisenden Kante angeordneten Thermoplastansätzen aufgebaut sind, wobei genau einer dieser beiden Thermoplaste laserlichtdurchlässig, der andere laserlichtabsorbierend ist, so dass die Bauteile dadurch miteinander verbindbar sind, und dass mittels des den einen Thermoplastansatz durchdringenden Laserlichtstrahls beide Thermoplastansätze miteinander verschweißt werden.

6. Gehäuse nach einem der vorigen Ansprüche, **dadurch gekennzeichnet, dass** an einer Schalenhälfte, die wenigstens teilweise aus Duroplast besteht, wenigstens ein Zapfen aus Thermoplast vorgesehen ist, der senkrecht von der inneren Bodenseite vorsteht und in einer daran angepassten Öffnung an der anderen Schalenhälfte einfügbar und daran bzw. darin befestigbar ist.

7. Gehäuse nach Anspruch 6, **dadurch gekennzeichnet, dass** die Zapfen als Spreizverbinder ausgebildet sind.

8. Gehäuse nach einem der vorigen Ansprüche, **dadurch gekennzeichnet, dass** am Gehäuse laserbeschriftbarer Thermoplast angespritzt ist.

9. Gehäuse für ein auf einer Hutprofiltragschiene aufschnappbares elektrisches Installationsgerät, mit einer am Boden des Gehäuses angeordneten Ausnehmung, in die eine bewegbare Rastnase zum Aufschnappen der Gehäuse auf eine Normprofiltragschiene, insbesondere Hutprofiltragschiene, eingreift, **dadurch gekennzeichnet, dass** die bewegbare Nase aus Thermoplast am Gehäuse angespritzt ist.
